# EUROPEAN PATENT SPECIFICATION

(11) **EP 0 391 746 B1**
(45) Date of publication and mention of the grant of the patent: **01.02.1995**
(21) Application number: 90303758.8
(22) Date of filing: 09.04.1990
(51) Int. Cl.: G01N 35/00

(54) **Apparatus for the separate injection of reagents**
Vorrichtung zur getrennten Zugabe von Reagenzien
Dispositif de distribution sélective de réactifs

(30) Priority: 07.04.1989 JP 88692/89
(43) Date of publication of application: 10.10.1990
(73) Proprietor: Tosoh Corporation, Shinnanyo-shi, Yamaguchi-ken, 746 (JP)
(72) Inventor: Iwasaki, Shuji, Fujisawa-shi, Kanagawa-ken (JP); Kagayama, Toshi, Yokohama-shi, Kanagawa-ken (JP); Kamata, Kazuya, Ebina-shi, Kanagawa-ken (JP)
(74) Representative: Kearney, Kevin David Nicholas

(56) References cited:
- FR-A- 2 239 167
- JP-A- 1 044 858
- US-A- 3 756 783

## Description

The present invention relates to an apparatus for separate injection of reagents which is employed for performing operations of selecting an arbitrary one out of a plurality of reagents prepared beforehand and injecting it separately into a reaction vessel in an installation wherein analytical operations such as a biochemical analysis or immunochemical measurements are conducted automatically.

The apparatus for separate injection of reagents employed for the aforesaid installation wherein an automatic analysis is conducted is usually and generally of the type wherein, a separate injection nozzle is used to suck a necessary reagent thereinto from a reagent reservoir and the nozzle moves onto an aimed (selected) reaction vessel and discharges the sucked reagent into the said reaction vessel.

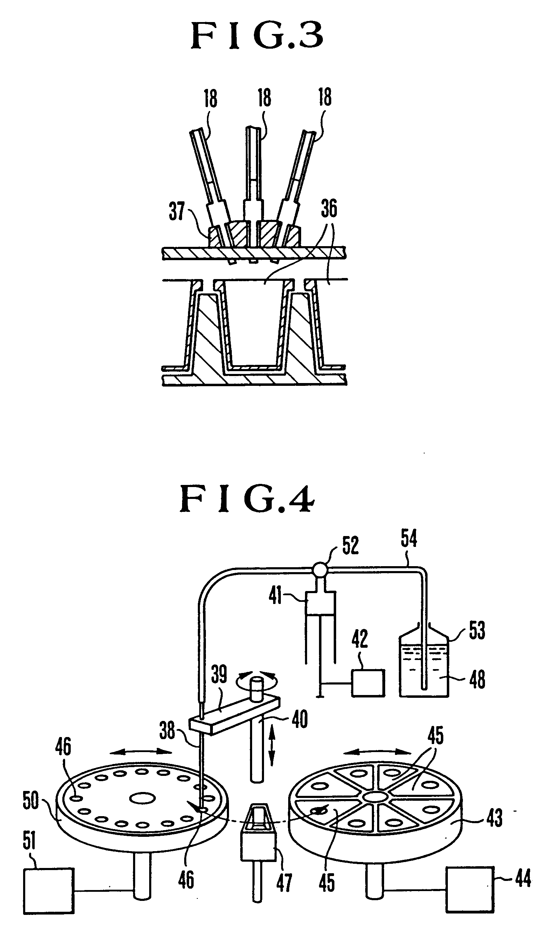

Figure 4 shows one example of such a prior art apparatus (as disclosed in Japanese Kokai 55-12-1150) for separate injection of reagents as stated above.

In the apparatus of this example, a separate injection nozzle 38 is retained in the turning (rotatable) fore end of a retainer 39 which is provided in such a manner that it is supported by a prop or rod 40 which can turn and move vertically, and the upper end of this separate injection nozzle is connected to a reagent pump 41 through a flexible tube 54 so that a positive or negative pressure can be supplied to the nozzle. Numeral 42 denotes a motor which drives this reagent pump 41.

At prescribed positions inside the turning track of the aforesaid separate injection nozzle 38, there are located a moving table 43 provided with a plurality of reagent reservoirs 45 and a moving table 50 having a number of reaction vessels 46 with openings disposed on the upper side thereof. The moving table 43 is so designed that, when rotated by a motor 44, it transfers a prescribed reagent reservoir 45 to the reagent suction position of the separate injection nozzle 38 to enable the nozzle to suck up some reagent. The reaction vessels 46 are moved in and out of the discharge position of the nozzle 38 for separate injection (discharge) of the reagent sequentially by rotation of the moving table 50 by a motor 51. In addition a reservoir 53 of a washing liquid 48 is connected through a selector valve 52 to the aforesaid flexible tube 54 connected to the reagent separate injection nozzle 38, so that the reagent remaining inside the separate injection nozzle after the discharge thereof can be washed away. This arrangement is made because there is the apprehension that another reagent selected in a subsequent separate injection operation of suction and discharge thereof may be polluted, and so, between operations, the separate injection nozzle 38 is moved to the position of a washing liquid port 47, where the washing liquid 48 is passed through said separate injection nozzle to wash the same.

However, the prior art apparatus for separate injection of reagents constructed as described above has several problems.

For instance, although the washing liquid is passed through the separate injection nozzle to wash the inside thereof in order to prevent the mutual pollution of reagents as described above, it is not easy to wash the inside of the nozzle completely and the problem of the washing of the inside of the nozzle is a real one and a not small problem in the field of the biochemical analysis wherein detection and measurement of a minute quantity of constituent are required. Even when washing to a required degree can be conducted, a considerable time is needed for this washing and this hinders the execution of quick analytical operations.

In terms of the mechanism of the apparatus as well, the apparatus shown in Figure 4 has a number of operating components and this produces a problem that the apparatus is large in size and complicated.

In the practical separate injection of reagents, moreover, it is needed in some cases to inject a plurality of kinds of reagents separately into one reaction vessel, and two methods can be thought of for the separate injection of a plurality of these reagents. The above-described apparatus for separate injection having the prior art construction has a problem that it is not suited for either of these methods. According to one of these methods, concretely, a moving table 43 is rotated appropriately, reagents are sucked by the separate injection nozzle 38 from a plurality of reagent reservoirs 45 sequentially in such a manner that a first reagent is sucked first, a second reagent secondly and a third reagent further, and these reagents are discharged together into the reaction vessel 46 by separate injection. In this method, the time for rotating the moving table 43 and selecting some reagent and the time for sucking the reagent come in turn. Consequently, a quick analysis is hindered and, in addition, there occurs a problem of the apprehension of the mutual pollution of reagents since the nozzle is put in the reagents sequentially without being washed.

According to the other method, the operation of suction from the reagent reservoir and discharge into the reaction vessel 46 is repeated for every reagent and thereby the separate injection of a plurality of reagents is carried out. This method has a problem that an extremely long time is required for the separate injection.

No problem of the mutual pollution of the reagents would take place and the separate injection of a plurality of reagents could be executed rapidly, of course, if the apparatus for separate injection were provided discretely for each reagent for conducting parallel separate injections. This method, however, would require an apparatus of an extremely complicated and large-sized construction, and therefore it is not practical and is not a real possibility.

FR-A-2239167 discloses an apparatus for supplying a plurality of different reagents from separate reagent reservoirs to open topped vessels, each reservoir being provided with at least one separate distribution tube and means for feeding reagent into the distribution tube, at least one filling location and retaining means above the said location to which the outlet ends of the distribution tubes are connected in spaced apart relationship so that reagent emerging from each tube will fall into an appropriately sized open topped vessel when said vessel is located below the retaining means.

US-A-3756783 discloses an analyzer in which conveying means are provided for conveying sample containers to a transfer position, and reagent containers to the same transfer position, and reaction containers to the same transfer position, and an indexing arm carrying a syringe with means for moving the arm horizontally and vertically whereby the syringe can be used to transfer sample and reagent to the reaction containers.

The present invention has an object to provide an apparatus for separate injection which solves these problems, has a simple and convenient construction, is free from the possibility of the mutual pollution of reagents and enables rapid separate injection of the reagents.

According to the present invention apparatus for supplying a plurality of different reagents from separate reagent reservoirs to open topped vessels, comprises reservoirs, each reservoir being provided with at least one separate distribution tube and means for dispensing reagent into the distribution tube, at least one filling location and retaining means above the said location to which the outlet ends of the distribution tubes are connected in spaced apart relationship so that reagent emerging from each tube will fall into an appropriately sized open topped vessel when said vessel is located below the retaining means, each reservoir having individual dispensing means, the apparatus further comprising a single drive mechanism for driving the dispensing means, characterised in that the single drive mechanism separately drives each individual dispensing means, and in that the reservoirs are arranged in a predetermined mutual positional relationship, the plungers of a plurality of dispensing means are disposed on the circumference of a circle, and in that the drive means comprise a rotatable operating lever for driving the plungers of the dispensing means provided at the axis of this circle so as to permit the separate and selective drive of the dispensing means in turn.

Each reservoir is preferably provided with individual dispensing means.

Desirably a plurality of filling locations are provided each provided with retaining means to which at least one distribution tube is connected and means are provided for conveying an open topped vessel sequentially to at least some of the said filling locations for reception of reagent.

The means for dispensing reagent is preferably a pump which delivers a reagent into the distribution tube by the forward and backward motion of a plunger.

The dispensing means desirably deliver a metered quantity of reagent into the distribution tube.

The apparatus for separate injection of reagents of the present invention operates in the following way, as in an example having a typical construction thereof which will be described later with regard to an embodiment.

When some reaction vessel for a biochemical analysis is transferred to and stopped at the position of separate injection of reagents whereat the above-mentioned separate injection ports in a plurality are provided, first an operating lever driving the dispenser of the reagent vessel to discharge the reagent into the reaction vessel is turned to select a necessary reagent out of a plurality of reagent reservoirs disposed on a concentric circle, and it is stopped just above the vessel of the selected reagent. Then, said operating lever is moved downward by a vertical-motion mechanism to push the plunger of the dispenser, so as to pass a reagent liquid in the reagent reservoir through the distribution tube and inject it separately into the reaction vessel from the separate injection port. After the operation of separate injection, the aforesaid operating lever is moved upward and returns to the initial position.

In the case when the separate injection of another reagent is performed successively, the turning and downward motion of the aforesaid operating lever are conducted successively. In other words, first the separate injection of the first reagent is performed by the turning and vertical drive of the operating lever as described above, and in succession the separate injection of the second reagent is executed immediately by the next turning and vertical motion. Furthermore, separate injections of other reagents are executed successively as occasion demands. Accordingly, successive separate injections of a plurality of reagents can be executed only by the turning and vertical motion of the operating lever. In addition, no mutual pollution of the reagents occurs inside the distribution tube, since the distribution tube for each reagent is provided separately from others.

The above and other objects, features and advantages of the present invention will become more apparent from the following description of the preferred embodiment thereof taken in conjunction with the accompanying drawings, in which the same reference numerals denote the same elements.

The invention may be put into practice in various ways and one specific embodiment and an embodiment of the prior art will be described to illustrate the invention with reference to the accompanying drawings, in which:
Figure 1 is a schematic illustration of one example of a construction of an apparatus for separate injection of reagents according to the present invention;
Figure 2 is a schematic plan view of the apparatus of Figure 1;
Figure 3 is a partial sectional view showing the relationship between a reaction vessel and a separate injection port; and
Figure 4 is a schematic view of a prior art apparatus for separate injection of reagents.

The present invention will be described hereunder on the basis of an embodiment shown in the drawings.

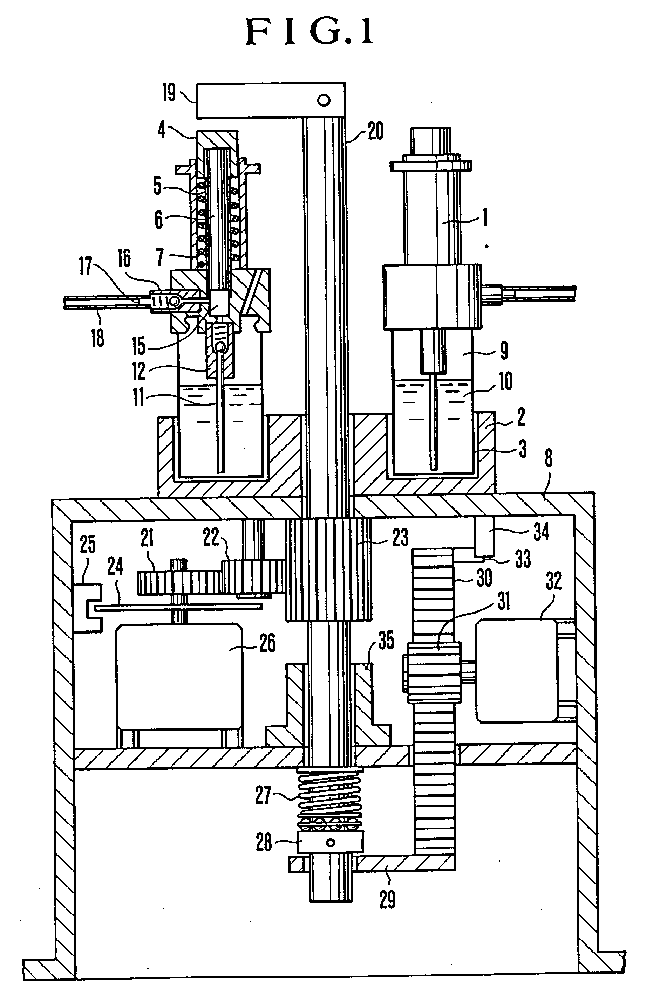

Figures 1 to 3 illustrate one example of an apparatus for separate injection of reagents according to the present invention. In these figures, numeral 9 denotes a reagent reservoir which is a cylindrical reservoir storing a reagent liquid 10 inside. A dispenser 1 is fitted on the top of the reservoir and said reagent liquid 10 is delivered from a discharge port 17 into a distribution tube 18 by the downward motion of a plunger 6. In more detail, this dispenser 1 is so designed that the plunger 6 held by a cylinder 5 is normally deviated upward by a spring 7 and an operating element 4 in the top part thereof which is pushed down by an operating lever 19 as will be described later, the reagent liquid held in a liquid reservoir 15 provided in the lower part of the cylinder 5 is delivered into the distribution tube 18 from a discharge valve 16 of a check valve type through the discharge port 17 mentioned above. On the occasion when the operating element 4 is moved upward for return by the force of the spring after it is pushed down, the liquid is pumped up into the aforesaid liquid reservoir 15 through the intermediary of a tube 11 dipped in the reagent liquid in the reagent reservoir and of a suction valve 12 of a check valve type. Accordingly, the aforesaid discharge valve 16 and suction valve 12 together constitute a pump which delivers the reagent liquid from the reagent reservoir into the distribution tube in coordination with the forward and backward motion of the plunger 6.

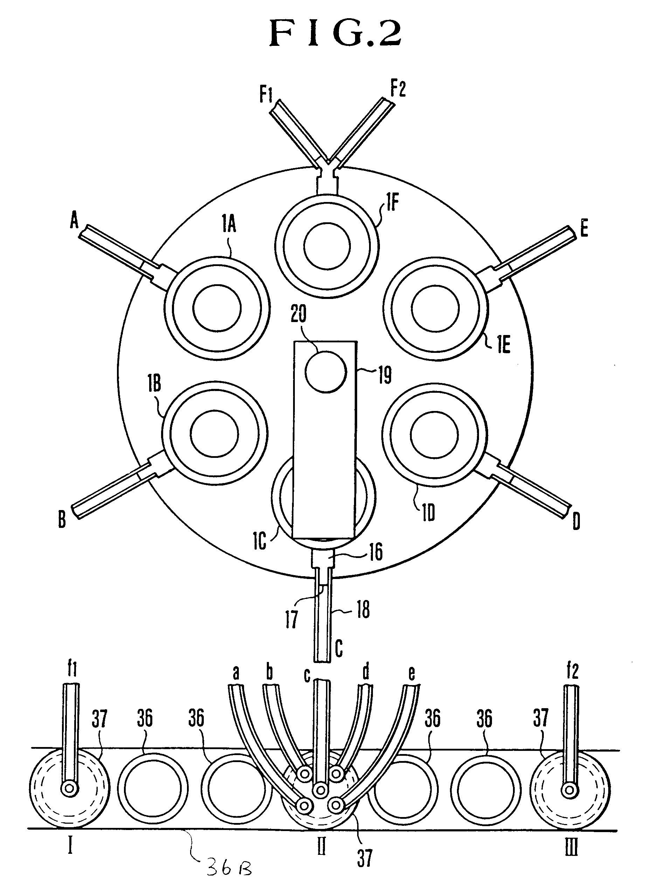

In the construction of the apparatus, the above-mentioned dispenser 1 (hereinafter called a push-type dispenser) is mounted in the upper part, and a plurality of reagent reservoirs 9 holding different reagents respectively are disposed in the form that they are fitted in fitting holes 3 of a retaining table 2, which holes are located at prescribed intervals around the circumference of a concentric circle as shown in Figures 1 and 2. The aforesaid operating lever 19 extends horizontally from and is supported by the top part of a support 20 located at the centre of the said circumference. The lever 19 is turned and moved vertically up and down by this support 20.

The aforesaid support 20 passes through a hole in the base plate of an apparatus stage 8 and is rotated by a pulse motor 26 through a train of gears 21, 22 and 23. 24 denotes a slit disk and 25 a photosensor. By inputting the signal from this sensor to a control circuit (not shown in the figures), the said control circuit detects the rotational position of the pulse motor 26, and thereby the turning position of the operating lever 19 in the top part of the aforesaid support can be identified.

The aforesaid support 20 is connected, for instance spline-connected, to the aforesaid gear 23 in such a way that it can move in the axial direction (the vertical direction in Figure 1). A compression spring 27 is provided between a flange 28 (a spring seat) in the lower end of the support 20 and a fixed part of the stage 8, so as to bias the support 20 downward (the downward direction in Figure 1). This biassing force on the support is stopped ordinarily by a stopper 29, so that the operating lever is normally maintained in the state shown in Figure 1. The aforesaid stopper 29 is mounted on a rack 30 which can be driven down by driving the pinion 31 of the rack 30 and pinion 31 by rotation of a pulse motor 32. The support is then moved downwardly by the force of the spring 27. Numeral 33 denotes a flag fixed to the rack 30, and 34 a photosensor fixed to the stage 8, whereby the home position in the vertical direction of the support 20 is set and can be located and checked.

The quantity of the reagent to be delivered is determined by the distance of the downward motion of this support 20. In the case when it is needed to change a necessary quantity of reagent to be delivered, according to an object of measurement or otherwise, the distance of the movement of the rack 30 from the home position can be determined by setting the number of rotations of the pulse motor 32 variably by a control circuit not shown in the figures. Numeral 35 denotes a support guide for the support 20, which guide is fixed to a fixed part of the stage 8.

According to the construction described above, the operating lever 19 can be positioned opposite to and above a selected one of the plurality of reagent reservoirs disposed on the circumference of the concentric circle by rotating the support 20. By moving this support downwardly subsequently, the reagent liquid in the liquid reservoir 15 of the dispenser 1 can be delivered into the distribution tube 18. The reagent liquid in the liquid reservoir 15 is replenished from the reagent reservoir 9 by the upward return motion of the operating lever.

Turning now to Figure 2 the arrangement of the reaction vessels and the distribution tubes 18 will be described.

Figure 2 shows a plan view of the apparatus shown in Figure 1 in the top half of the figure and a delivery station for delivery of selected reagents to reaction vessels 36 at three separate locations I, II and III. The vessels 36 are moved progressively along the track from position I to position III in individual steps by conveyor means (36B).

At each of the positions I, II and III a retainer 37 is mounted above the path of the vessels 36. The purpose of the retainer is to secure the ends of the distribution tubes above the opening of a reaction vessel located below the retainer.

Six reagent vessels are shown (more or less could be used) and are labelled 1A, 1B, 1C, 1D, 1E and 1F. Each has a distribution tube 18A-18E but vessel 1F has two reagent distribution tubes 18 f1 and 18 f2. The ends of the tubes are labelled f1, f2, and a, b, c, d and e.

The end f1 is secured in the retainer at position I, the end f2 at position III and the ends a, b, c, d and e at position II. Other arrangements could be provided.

Movement of a reaction vessel from position I to position III thus allows injection (or not) from f1 at I, then any of a-e at II, then injection from f2 in the same or different amounts as f1 at III, into the same reaction vessel 36 without pollution of the distribution tubes 18.

Thus on the end part of the distribution tube 18 (this is provided in a plurality and distribution tubes corresponding to reagent vessels 1A and 1E are denoted by A to E respectively, while a distribution tube F corresponding to a reagent vessel 1F has branches F₁ and F₂) the other end of which is connected to the discharge port 17 of the dispenser 1 of one of the aforesaid reagent reservoirs 1A, 1B, 1C, 1D, 1D, 1E and 1F is fixed discretely to a retainer 37 which is provided at a position I, II or III of separate injection set on the route of conveyance of the reaction vessels.

In other words, the ends a to e of the distribution tubes A to E are fixed to the retainer 37 at the position II of separate injection as shown in the figure, and the end f₁ of one branch of the distribution tube F is fixed to the retainer 37 at the position I of separate injection, while the end f₂ of the other branch of the distribution tube F is fixed to the retainer 37 at the position III of separate injection. By driving the dispenser 1 of each reagent reservoir, according to this constitution, a selected reagent liquid can be injected separately into a prescribed reaction vessel 36 at a prescribed position of separate injection. In addition, an advantage is produced since there is no possibility of a distribution channel of each reagent liquid causing the mutual pollution with any other, since each distribution tube 18 is completely separate from the others.

As to the reagent in the reagent reservoir 1F, it can be injected separately in different reaction vessels at the same time at the positions I and III of separate injection.

The present invention is not limited, of course, to the mode of the embodiment described above, but can be embodied in various modified modes. For instance, a construction wherein a temperature-regulating device is provided as an attachment to the reagent reservoir or other parts may preferably be adopted.

The apparatus for separate injection of reagents according to the present invention permits a plurality of reagents to be injected separately with complete removal of mutual pollution thereof by a small-sized and simple mechanism, and successive separate injections can be performed in a very short time. It can be used very suitably, in particular, for a biochemical analysis installation and an immunochemical measuring installation wherein the mutual pollution of reagents directly causes false measurements.

The apparatus for separate injection of reagents of the present invention also effectively meets the demand for quick execution of the separate injection of a plurality of reagents by a small-sized apparatus, since it uses a system wherein a plurality of dispensers are driven selectively by using a common driving mechanism.

## Claims

1. Apparatus for supplying a plurality of different reagents (10) from separate reagent reservoirs (9) to open topped vessels (36), the apparatus comprising reservoirs, each reservoir being provided with at least one separate distribution tube (18) and means (1) for dispensing reagent into the distribution tube (18), at least one filling location and retaining means (37) above the said location to which the outlet ends of the distribution tubes (18) are connected in spaced apart relationship so that reagent (10) emerging from each tube (18) will fall into an appropriately sized open topped vessel (36) when said vessel is located below the retaining means (37), each reservoir having individual dispensing means, the apparatus further comprising a single drive mechanism (19,20) for driving the dispensing means (1), characterised in that the single drive mechanism separately drives each individual dispensing means, and in that the reservoirs (9) are arranged in a predetermined mutual positional relationship, the plungers (6) of a plurality of dispensing means (1) are disposed on the circumference of a circle, and in that the drive means comprise a rotatable operating lever (19) for driving the plungers of the dispensing means provided at the axis of this circle so as to permit the separate and selective drive of the dispensing means in turn.

2. Apparatus as claimed in Claim 1 characterised in that a plurality of filling locations are provided each provided with retaining means (37) to which at least one distribution tube (18) is connected and means (36B) for conveying an open topped vessel (36) sequentially to at least some of the said filling locations for reception of reagent.

3. Apparatus for separate injection of reagents as claimed in Claim 1 or Claim 2 characterised in that the means for dispensing reagent is a pump (12,16) which delivers a reagent into the distribution tube (18) by the forward and backward motion of a plunger (6).

4. Apparatus as claimed in any one of Claims 1 to 3 characterised in that the dispensing means (1) deliver a metered quantity of reagent into the distribution tube (18).

## Patentansprüche

1. Vorrichtung zum Zuführen mehrerer verschiedener Reagenzien (10) aus getrennten Reagenz-Vorratsbehältern (9) in oben offene Behälter (36), wobei die Vorrichtung aufweist: Vorratsbehälter, die jeweils mit mindestens einem getrennten Verteilerrohr (18) und einer Einrichtung (1) versehen sind, um ein Reagenz in das Verteilerrohr (18) abzugeben, mindestens eine Füllstation und eine Halteeinrichtung (37) oberhalb der Stelle, an der die Auslaßenden der Verteilerrohre (18) beabstandet verbunden sind, so daß das aus jedem Rohr (18) austretende Reagenz (10) in einen geeignet bemessenen, oben offenen Behälter (36) fällt, wenn der Behälter unterhalb der Halteeinrichtung (37) angeordnet ist, wobei jeder Vorratsbehälter einzelne Abgabeeinrichtungen aufweist, und wobei die Vorrichtung ferner einen einzigen Antriebsmechanismus (19, 20) aufweist, um die Abgabeeinrichtungen (1) zu betätigen, dadurch gekennzeichnet, daß der einzige Antriebsmechanismus jede einzelne Abgabeeinrichtung getrennt antreibt und daß die Vorratsbehälter (9) in einer vorgegebenen gegenseitigen Positionsbeziehung angeordnet sind, die Kolben (6) mehrerer Abgabeeinrichtungen (1) auf dem Umfang eines Kreises angeordet sind und daß die Antriebseinrichtung einen drehbaren Betätigungshebel (19) aufweist, um die Kolben der Abgabeeinrichtung zu betätigen, die an der Achse dieses Kreises angeordnet sind, um die getrennte und wahlweise Betätigung der Abgabeeinrichtung zu erlauben.

2. Vorrichtung nach Anspruch 1, dadurch gekennzeichnet, daß mehrere Füllstationen vorgesehen sind, die jeweils mit einer Halteeinrichtung (37) versehen sind, mit der mindestens ein Verteilerrohr (18) verbunden ist, und mit einer Einrichtung (36B) zum Transportieren eines oben offenen Behälters (36) sequentiell zu mindestens einigen der Füllstationen zum Aufnehmen des Reagenz.

3. Vorrichtung zum getrennten Injizieren von Reagenzien nach Anspruch 1 oder 2, dadurch gekennzeichnet, daß die Einrichtung zum Abgeben eines Reagenz eine Pumpe (12, 16) ist, die durch Vor- und Rückwärtsbewegung eines Kolbens (6) ein Reagenz in das Verteilerrohr (18) abgibt.

4. Vorrichtung nach einem der Ansprüche 1 bis 3, dadurch gekennzeichnet, daß die Abgabeeinrichtung (1) eine gemessene Reagenzmenge in das Verteilerrohr (18) abgibt.

## Revendications

1. Dispositif pour fournir une multitude de réactifs différents (10) à partir de réservoirs séparés de réactifs (9) à des récipients à l'extrémité ouverte (36), le dispositif comportant des réservoirs, chaque réservoir étant muni d'au moins un tube de distribution séparé (18) et d'un moyen pour distribuer un réactif dans le tube de distribution (18), au moins un emplacement de remplissage et un moyen de maintien (37) au-dessus dudit emplacement auquel les extrémités de sortie des tubes de distribution (18) sont connectées dans une relation espacée de sorte que le réactif (10) sortant de chaque tube (18) tombera dans un récipient à l'extrémité ouverte, de dimensions appropriées, lorsque ledit récipient est situé au-dessous du moyen de maintien (37), chaque réservoir ayant un moyen de distribution individuel, le dispositif comportant en outre un seul mécanisme de commande (19, 20) pour entraîner le moyen de distribution (1), caractérisé en ce que le seul mécanisme de commande entraîne séparément chaque moyen de distribution individuel, et en ce que les réservoirs (9) sont disposés dans une relation mutuelle déterminée des positions, les plongeurs (6) d'une multitude de moyens de distribution (1) sont disposés sur la circonférence d'un cercle, et en ce que le moyen de commande comprend un levier d'actionnement rotatif (19) afin d'entraîner les plongeurs des moyens de distribution prévus à l'axe de ce cercle de façon à permettre la commande séparée sélective des moyens de distribution tour à tour.

2. Dispositif selon la revendication 1, caractérisé en ce qu'une multitude d'emplacements de remplissage sont prévus, chacun étant équipé d'un moyen de maintien (37) auquel au moins un tube de distribution (18) est connecté et d'un moyen (36B) pour acheminer un récipient à l'extrémité ouverte (36) de manière séquentielle jusqu'à au moins certains desdits emplacements de remplissage pour réception d'un réactif.

3. Dispositif pour l'injection séparée de réactifs selon la revendication 1 ou la revendication 2, caractérisé en ce que le moyen pour distribuer un réactif est une pompe (12, 16) qui délivre un réactif dans le tube de distribution (18) sous l'effet du mouvement d'un plongeur (6) vers l'avant et vers l'arrière.

4. Dispositif selon l'une quelconque des revendications 1 à 3, caractérisé en ce que les moyens de distribution (1) délivrent une quantité dosée du réactif dans le tube de distribution (18).
